# EUROPÄISCHE PATENTSCHRIFT

(11) **EP 3 003 837 B1**
(45) Veröffentlichungstag und Bekanntmachung des Hinweises auf die Patenterteilung: **25.07.2018**
(21) Anmeldenummer: 14725368.6
(22) Anmeldetag: 20.05.2014
(51) Int. Cl.: B62D 21/00, B62D 21/02, B62D 25/00, F16B 7/18, F16B 37/06, B62D 27/06, F16B 37/04

(54) **MEHRKAMMERPROFIL MIT EINEM EINLEGETEIL ZUR BEFESTIGUNG EINES ANBAUTEILS**
MULTI-CHAMBER PROFILE HAVING AN INSERT PART FOR FIXING AN ATTACHED PART
PROFILÉ COMPARTIMENTÉ COMPRENANT UN ÉLÉMENT D'INSERTION DESTINÉ À LA FIXATION D'UN ÉLÉMENT RAPPORTÉ

(30) Priorität: 24.05.2013 DE 102013008913
(43) Veröffentlichungstag der Anmeldung: 13.04.2016
(73) Patentinhaber: Audi AG, 85045 Ingolstadt (DE)
(72) Erfinder: CARLE, Klaus-Dieter, 74074 Heilbronn (DE); SCHÄFER, Karlheinz, 74189 Weinsberg (DE)
(74) Vertreter: Patzelt, Heike Anna Maria
(86) Internationale Anmeldenummer: PCT/EP2014/001346
(87) Internationale Veröffentlichungsnummer: WO 2014/187557

(56) Entgegenhaltungen:
- EP-A1- 2 187 070
- EP-A2- 0 841 240
- EP-A2- 0 937 630
- EP-A2- 1 566 327
- DE-A1-102007 019 699
- FR-A1- 2 814 426

## Beschreibung

Die Erfindung betrifft ein Hohlprofil gemäß dem Oberbegriff des Patentanspruchs 1.

Im Fahrzeugbau werden zur Herstellung einer Fahrzeugkarosserie u. a. Längs- und Querträger eingesetzt, die miteinander verbunden werden müssen und im Hinblick auf eine ausreichende Fahrzeugsicherheit bei Unfällen, wie bspw. bei Frontal- oder Seitencrashs eine ausreichende Steifigkeit aufweisen müssen. Hierzu werden in die Träger eingebundene Einlegeteile verwendet, die zur Anbindung von weiteren Bauteilen, sogenannten Anbauteilen, wie bspw. Hilfsrahmen dienen.

Die gattungsbildende EP 0 937 630 A2 beschreibt einen profilartig ausgebildeten Querträger einer Fahrzeugrohkarosserie, der einen Mitteltunnel kreuzt und mit seinen beiden Enden mit jeweils einem Seitenschweller verbunden ist. Zur Anbindung von Anbauteilen ist an einer Bodenwand eines geschlossenen Profils eines Abschnittes des Querträgers ein T-Schlitz zur verschiebbaren Aufnahme eines Befestigungselementes vorgesehen. Dieses Befestigungselement ist als T-Mutter mit einem rechteckig erweiterten Abschnitt ausgebildet, wobei dieser Abschnitt an den T-Schlitz verschiebbar angepasst ist. Die Befestigung eines Anbauteils erfolgt mittels einer Schraube, die durch die Bodenwand in die T-Mutter eingeführt wird.

Ferner ist es bekannt, zur Anbindung eines Anbauteils an einen Fahrzeugkarosserie-Längsträger mit einem Mehrkammerhohlprofil eine Hülse mit einem Schaftabschnitt und einem Hülsenkopf zu verwenden. Dazu wird der Schaftabschnitt durch den gesamten Querschnitt einschließlich der zur Bildung der Kammern vorgesehenen Trennwänden des Mehrkammerhohlprofils von einer ersten äußeren Seitenwand bis zur gegenüberliegenden zweiten äußeren Seitenwand des Mehrkammerhohlprofils hindurchgeführt, bis der Hülsenkopf an der ersten äußeren Seitenwand anliegt und ggf. das Schaftende die zweite äußere Seitenwand durchstößt. Eine solche Hülse kann dann mit dem Längsträger im Bereich des Hülsenkopfes und des Schaftendes verschweißt werden und bilden dort jeweils Anbindungspunkte für die Anbauteile. Nachteilig ist hierbei, dass die Profilstruktur eines solchen Mehrkammerhohlprofiles geschädigt wird und dadurch auch ein in nachteiliger Weise verändertes Deformationsverhalten im Falle von Crashs eintritt.

Die EP 0 841 240 A2 schlägt als Lösung ein Hohlprofil mit zwei oder mehr Kammern vor, in das eine Hülse so eingesetzt wird, dass sie nur eine äußere Kammer durchsetzt bzw. zumindest eine Kammer frei bleibt. Dabei stützt sich die Hülse im Inneren des Hohlprofils an einer Trennwand zwischen zwei Kammern ab und ragt dabei nicht oder nur geringfügig in die benachbarte Kammer hinein, wobei die Hülse an der Trennwand und auch an der äußeren Begrenzungswand des Hohlprofil spielfrei über eine stoffschlüssige oder kraftschlüssige Verbindung angebunden wird. Zur Anbindung der Hülse an die Trennwand weist diese eine Durchgangsöffnung auf, in die das Ende der Hülse gesteckt wird. Auch bei dieser Lösung ist somit eine Schwächung der Trennwand aufgrund der Durchgangsöffnung vorgesehen, so dass auch bei einem solchen Hohlprofil das Deformationsverhalten verändert wird.

Weiterhin ist aus der EP 1 566 327 A2 ein Hohlprofilelement mit einer Vielzahl benachbarter Hohlkammern bekannt, in welches zur Erzielung von Schraubverbindungen Gewindeeinsätze in die Hohlkammern eingesetzt und mit dem Hohlprofilelement verschweißt oder verklebt werden. Mit solchen Gewindeeinsätzen wird eine Schraubverbindung von Anbauteilen mit dem Hohlprofilelement realisiert.

Die FR 2 814 426 A1 beschreibt einen Längsträger mit Hohlprofil, in welchem ein Einlegeteil angeordnet ist, mittels welchem über eine Öffnung in dem Längsträger ein Anbauteil mittels einer Schraubverbindung angebunden werden kann. Zwischen dem Einlegeteil und der Innenwandung des Längsträgers ist ein dünnwandiges Hohlprofil angeordnet, wobei zur Lagefixierung dieses Einlegeteils auf der Innenwandung Rastnasen angeordnet sind, welche in entsprechende Rastöffnungen auf der Außenwandung des Hohlprofils eingreifen.

Eine Schraubverbindung zum Befestigen eines ersten Bauteils an einem als profilartiges Blechformteil ausgestatteten zweiten Bauteil sieht gemäß der DE 10 2007 019 699 A1 vor, dass das erste Bauteil eine erste Durchgangsöffnung mit einer Buchse und das zweite Bauteil eine zweite Durchgangsöffnung aufweist. Das erste Bauteil wird mittels einer Schraube über dessen ersten Durchgangsöffnung und einer ein Innengewinde aufweisenden Buchsenöffnung der Buchse mit dem ersten Bauteil verschraubt.

Schließlich beschreibt die EP 2 187 07 A1 ein Abstandselement mit einer axialen Gewindebohrung, welches an zwei einander gegenüberliegenden Wandabschnitten eines einen Hohlraum bildenden Blechteils befestigt ist. Über die axiale Gewindebohrung des Abstandselementes sowie mit dieser axialen Gewindebohrung fluchtende Öffnungen in den Wandabschnitten können mittels einer Schraube Anbauteile an dem Blechteil befestigt werden.

Ausgehend von diesem Stand der Technik ist es Aufgabe der Erfindung ein Hohlprofil der eingangs genannten Art anzugeben, bei dem eine stabile und funktionssichere Verbindung zwischen diesem Hohlprofil und einem Anbauteil ermöglicht wird, ohne dass sich das Deformationsverhalten des Hohlprofils bei Verwendung desselben als Längsträger einer Fahrzeugkarosserie dadurch ändert.

Diese Aufgabe wird gelöst durch ein Hohlprofil mit den Merkmalen des Patentanspruchs 1.

Ein solches Hohlprofil mit wenigstens einer innenliegenden Trennwand zur Bildung von Kammern, bei dem zur Befestigung eines Anbauteils an dem Hohlprofil ein Einlegeteil in einer Montageposition innerhalb einer Kammer angeordnet ist, das Einlegeteil zur Herstellung einer Verbindung mit dem Anbauteil ein Verbindungsmittel aufweist und das Einlegeteil zum Einführen in die Kammer des Hohlprofils und zu dessen Positionierung in der Montageposition ausgebildet ist, zeichnet sich erfindungsgemäß dadurch aus, dass
- das Einlegeteil als Mehrkammerprofil mit einer senkrecht zur Profilrichtung des Hohlprofils und senkrecht zur Trennwand verlaufenden Profilrichtung ausgebildet ist, die Länge (L) in dessen Profilrichtung ausgebildet ist, und
- eine an einer äußeren Begrenzungswand des Hohlprofils anliegende Stirnfläche des Einlegeteils einen zapfenförmigen Anschlussflansch aufweist, welcher zur Fixierung des Einlegeteils in der Montageposition in eine Durchgangsöffnung der Begrenzungswand formschlüssig eingreift.

Mit einem solchen in eine Kammer des Hohlprofils einführbaren Einlegeteil ist lediglich eine einzige Durchgangsöffnung in einer äußeren Begrenzungswand des Hohlprofils erforderlich, deren Kontur an die äußere Kontur des Anschlussflansches des Einlegeteils angepasst ist. Dadurch dass dieser Anschlussflansch in seinem Durchmesser wesentlich kleiner als das Hohlprofil gewählt werden kann, weist auch die Durchgangsöffnung einen entsprechend kleinen Durchmesser auf. Dieser geringfügige strukturelle Eingriff in das Hohlprofil führt dazu, dass die Deformationseigenschaften des Hohlprofils nicht oder nur geringfügig beeinträchtigt werden.

Nach einer vorteilhaften Ausgestaltung der Erfindung ist das Einlegeteil mit Anlageflächen ausgebildet, welche in der Montageposition des Einlegeteils an den zur Begrenzungswand benachbarten Seitenwänden der Kammer im Wesentlichen flächig anliegen. Damit wird eine gute Krafteinleitung eines mit dem Einlegeteil verbundenen Anbauteils in das Hohlprofil erzielt. Vorzugsweise weisen dabei die Seitenwände im Bereich der Anlageflächen des Einlegeteils wenigstens eine Befestigungsöffnung auf, mittels welchen das Einlegeteil mit dem Hohlprofil verbunden wird. Alternativ kann die Verbindung des Hohlprofils mit dem Einlegeteil auch mit einer kraft- und/oder stoffschlüssigen Verbindung zwischen den Anlageflächen des Einlegeteils und den Seitenwänden des Hohlprofils realisiert werden, also bspw. mittels einer Schraub- und/oder Schweißverbindung.

Nach einer weiteren vorteilhaften Ausgestaltung der Erfindung ist das Verbindungsmittel als in Profilrichtung des Einlegeteils und durch den Anschlussflansch verlaufende Verbindungsbohrung ausgebildet. Über eine solche Verbindungsbohrung lässt sich bspw. mittels einer Schraubverbindung eine sichere Anbindung des Anbauteils an das Hohlprofil realisieren.

Des Weiteren ist in vorteilhafter Weise das Einlegeteil als Mehrkammerprofil weiterbildungsgemäß mit einem die Verbindungsbohrung aufnehmenden zylinderförmigen Profilelement ausgebildet, welches zur Bildung von Kammern über Stegwände mit äußeren Seitenwänden des Einlegeteils verbunden ist. Vorzugsweise sind dabei die äußeren Seitenwände mit den Anlageflächen ausgebildet.

Schließlich ist nach einer letzten bevorzugten Ausgestaltung der Erfindung der Anschlussflansch mit einer mit der äußeren Fläche der Begrenzungswand fluchtenden Stirnfläche ausgebildet, wobei eine Zwischenscheibe mit einer mit der Verbindungsbohrung kongruent ausgebildeten Bohrung vorgesehen ist, welche flächenbündig auf der Stirnfläche des Anschlussflansches und der diesen umgebenden äußeren Fläche der Begrenzungswand aufliegt.

Die Erfindung wird nachfolgend anhand eines Ausführungsbeispiels unter Bezugnahme auf die beigefügten Figuren ausführlich beschrieben. Es zeigen:
- Figur 1: eine perspektivische Teildarstellung eines Hohlprofils mit zwei Einlegeteilen einschließlich einer Schnittansicht gemäß der Erfindung, und
- Figur 2: eine perspektivische Darstellung eines Einlegeteils gemäß Figur 1.

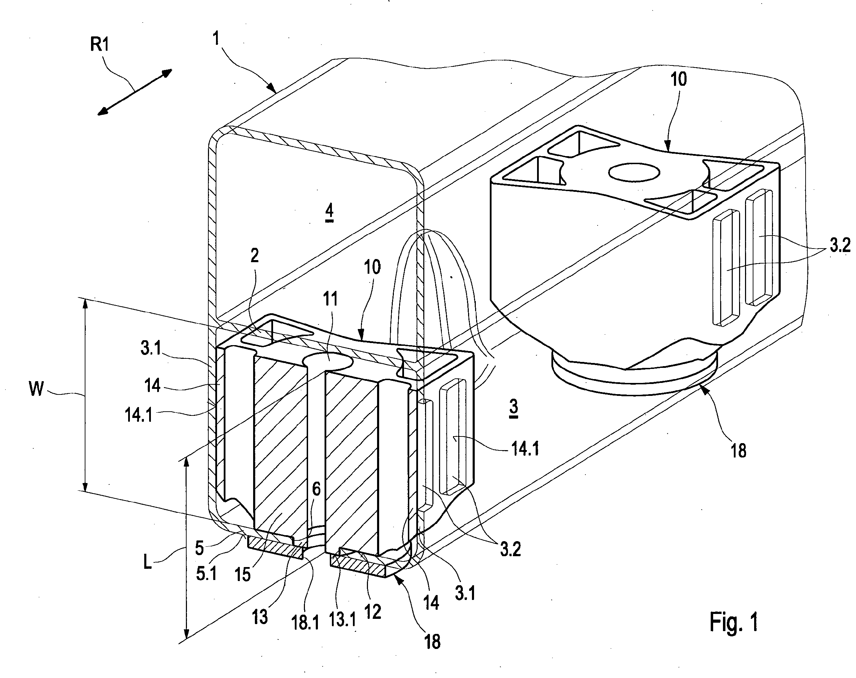

Figur 1 zeigt ein als Längsträger ausgebildetes Hohlprofil 1, welches mittels einer Trennwand 2 in zwei Kammern 3 und 4 geteilt ist, so dass dieses Hohlprofil 1 ein Mehrkammerhohlprofil darstellt.

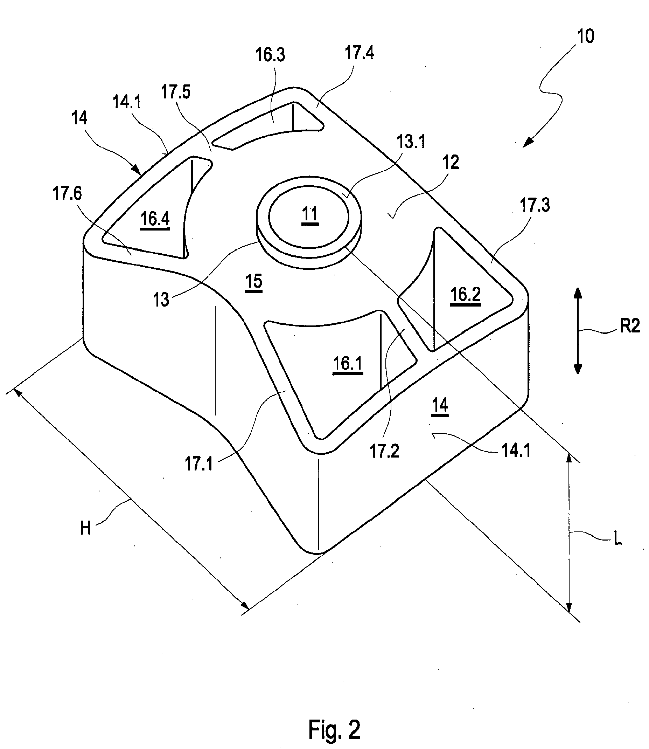

In der Kammer 3 dieses Hohlprofils 1, die von zwei Seitenwänden 3.1 und einer unteren äußeren Begrenzungswand 5 begrenzt ist, sind zwei Einlegeteile 10 angeordnet, wobei eines dieser beiden Einlegeteile 10 in einer Schnittansicht dargestellt ist. In perspektivischer Ansicht zeigt Figur 2 ein solches Einlegeteil 10. Das Hohlprofil 1 ist transparent dargestellt, um die Einlegeteile 10 besser zu erkennen.

Ein solches Einlegeteil 10 ist als Mehrkammerprofil ausgebildet und erstreckt sich mit seiner Profilrichtung R2 senkrecht zur Profilrichtung R1 des Hohlprofils 1 sowie senkrecht zur Trennwand 2 und der äußeren Begrenzungswand 5. Als Mehrkammerprofil ist dieses Einlegeteil 10 mit einem zentralen Profilelement 15 ausgebildet, welches eine Verbindungsbohrung 11 als Verbindungsmittel aufweist, über die ein Anbauteil (in den Figuren nicht dargestellt) mit dem Hohlprofil 1, bspw. mittels einer Schraubverbindung verbunden werden kann. Zur Bildung von Kammern 16.1, 16.2, 16.3 und 16.4 des Einlegeteils 10 ist das Profilelement 15 über Stegwände 17.1, 17.2, 17.3, 17.4, 17.5 und 17.6 mit einer äußeren Begrenzungswand 14 des Einlegeteils 10 verbunden, wobei die äußeren Flächen der beiden Begrenzungswände 14 jeweils eine an die beiden Seitenwände 3.1 des Hohlprofils 1 anliegende Anlagefläche 14.1 bilden, wenn sich das Einlegeteil 10 in seiner Montageposition in der Kammer 3 befindet. Damit ist dieses Einlegeteil 10 mit einer Höhe H ausgebildet, die dem Abstand der beiden Seitenwände 3.1 des Hohlprofils 1 entspricht.

Insbesondere aus Figur 2 ist zu erkennen, dass das Einlegeteil 10 auf einer Stirnfläche 12 einen Anschlussflansch 13 aufweist, der auf dem Profilelement 15 die Verbindungsbohrung 11 kreisringförmig umschließt.

Um ein solches Einlegeteil 10 in die Kammer 3 bis in die vorgegebene Montageposition einschieben zu können, entspricht die Länge L des Einlegeteils 10 in seiner Profilrichtung R2 einschließlich des Anschlussflansches 13 höchstens der Weite W der Kammer 3, also dem Abstand zwischen der Trennwand 2 und der äußeren Begrenzungswand 5.

Die Montageposition des Einlegeteils 10 in der Kammer 3 zeichnet sich dadurch aus, dass der auf der Stirnfläche 12 des Einlegeteils 10 angeformte Anschlussflansch 13 in eine in der Begrenzungswand 5 angeordnete Durchgangsöffnung 6 hindurchgeführt ist. Daher entspricht der äußere Durchmesser des Anschlussflansches 13 dem Durchmesser der Durchgangsöffnung 6. Ferner entspricht die Höhe des Anschlussflansches 3 über der Stirnfläche 12 des Einlegeteils 10 der Dicke der äußeren Begrenzungswand 5 des Hohlprofils 1, so dass in der Montageposition des Einlegeteils 10 die äußere Stirnfläche 13.1 des Anschlussflansches 13 mit der äußeren Fläche 5.1 der Begrenzungswand 5 fluchtet.

Damit kann ein solches Einlegeteil 10 in die Kammer 3 bis in die jeweilige Montageposition eingeführt werden, in der es mittels des in die Durchgangsöffnung 6 quasi "einrastenden" Anschlussflansches 13 fixiert wird. Eine Verbindung mit dem Hohlprofil 1 erfolgt mittels Befestigungsöffnungen 3.2 in den Seitenwänden 3.1 der Kammer 3, die hierzu als in Profilrichtung R2 des Einlegeteils 10 verlaufende Langlöcher ausgebildet sind, so dass über diese Befestigungsöffnungen 3.2 und den Anlageflächen 14.1 des Einlegeteils 10 eine kraftschlüssige Verbindung, bspw. eine Klebe- oder Schweißverbindung zwischen dem Einlegeteil 10 und dem Hohlprofil 1 hergestellt werden kann.

Zur Montage eines Anbauteils an das Hohlprofil 1 mittels des Einlegeteils 10 ist eine Zwischenscheibe 18, quasi als "Unterlegscheibe" vorgesehen. Hierzu weist diese Zwischenscheibe 18 eine geringfügig größere Bohrung 18.1 gegenüber dem Durchmesser der Verbindungsbohrung 11 auf und liegt derart auf der äußeren Fläche 5.1 der Begrenzungswand 5 auf, dass die Bohrung 18.1 und die Verbindungsbohrung 11 übereinander liegen.

Die Verbindung des Einlegeteils 10 mit dem Hohlprofil 1 kann auch ohne die Befestigungsöffnungen 3.2 realisiert werden, indem die Anlageflächen 14.1 des Einlegeteils 10 mittels einer Schraub- und/oder Schweißverbindung mit den Seitenwänden 3.1 des Hohlprofils 1 verbunden werden.

### Bezugszeichen

- 1: Hohlprofil
- 2: Trennwand des Hohlprofils 1
- 3: Kammer des Hohlprofils 1
- 3.1: Seitenwand der Kammer 3
- 3.2: Befestigungsöffnung
- 4: Kammer des Hohlprofils 1
- 5: äußere Begrenzungswand des Hohlprofils 1
- 5.1: äußere Fläche der Begrenzungswand 5
- 6: Durchgangsöffnung der Begrenzungswand 5

- 10: Einlegeteil
- 11: Verbindungsmittel, Verbindungsbohrung
- 12: Stirnfläche des Einlegeteils 10
- 13: Anschlussflansch des Einlegeteils 10
- 13.1: Stirnfläche des Anschlussflansches 13
- 14: äußere Begrenzungswand des Einlegeteils 10
- 14.1: Anlagefläche des Einlegeteils 10
- 15: Profilelement des Einlegeteils 10
- 16.1: Kammer des Einlegeteils 10
- 16.2: Kammer des Einlegeteils 10
- 16.3: Kammer des Einlegeteils 10
- 16.4: Kammer des Einlegeteils 10
- 17.1: Stegwand des Einlegeteils 10
- 17.2: Stegwand des Einlegeteils 10
- 17.3: Stegwand des Einlegeteils 10
- 17.4: Stegwand des Einlegeteils 10
- 17.5: Stegwand des Einlegeteils 10
- 17.6: Stegwand des Einlegeteils 10
- 18: Zwischenscheibe
- 18.1: Bohrung der Zwischenscheibe 18

## Patentansprüche

1. Hohlprofil (1) mit wenigstens einer innenliegenden Trennwand (2) zur Bildung von Kammern (3, 4), wobei
- zur Befestigung eines Anbauteils an dem Hohlprofil (1) ein Einlegeteil (10) in einer Montageposition innerhalb einer Kammer (3) angeordnet ist,
- das Einlegeteil (10) zur Herstellung einer Verbindung mit dem Anbauteil ein Verbindungsmittel (11) aufweist, und
- das Einlegeteil (10) mit einer Länge (L) zum Einführen des Einlegeteils (10) in die Kammer (3) des Hohlprofils (1) und dessen Positionierung in der Montageposition ausgebildet ist,
**dadurch gekennzeichnet, dass**
- das Einlegeteil (10) als Mehrkammerprofil mit einer senkrecht zur Profilrichtung (R1) des Hohlprofils (1) und senkrecht zur Trennwand (2) verlaufenden Profilrichtung (R2) ausgebildet ist, die Länge (L) in dessen Profilrichtung ausgebildet ist, und
- eine an einer äußeren Begrenzungswand (5) des Hohlprofils (1) anliegende Stirnfläche (12) des Einlegeteils (10) einen zapfenförmigen Anschlussflansch (13) aufweist, welcher zur Fixierung des Einlegeteils (10) in der Montageposition in eine Durchgangsöffnung (6) der Begrenzungswand (5) formschlüssig eingreift.

2. Hohlprofil (1) nach Anspruch 1,
**dadurch gekennzeichnet, dass** das Einlegeteil (10) mit Anlageflächen (14.1) ausgebildet ist, welche in der Montageposition des Einlegeteils (10) an den zur Begrenzungswand benachbarten Seitenwänden (3.1) der Kammer (3) im Wesentlichen flächig anliegen.

3. Hohlprofil (1) nach Anspruch 2,
**dadurch gekennzeichnet, dass** die Seitenwände (3.1) im Bereich der Anlageflächen (14.1) des Einlegeteils (10) wenigstens eine Befestigungsöffnung (3.2) aufweisen, mittels welchen das Einlegeteil (10) mit dem Hohlprofil (1) verbunden wird.

4. Hohlprofil (1) nach Anspruch 2,
**dadurch gekennzeichnet, dass** die Seitenwände (3.1) des Hohlprofils (1) mit den Anlageflächen (14.1) des Einlegeteils (10) kraft- und/oder stoffschlüssig miteinander verbunden sind.

5. Hohlprofil (1) nach einem der vorhergehenden Ansprüche,
**dadurch gekennzeichnet, dass** das Verbindungsmittel als in Profilrichtung (R2) des Einlegeteils (10) und durch den Anschlussflansch (13) verlaufende Verbindungsbohrung (11) ausgebildet ist.

6. Hohlprofil (1) nach Anspruch 5,
**dadurch gekennzeichnet, dass** das Einlegeteil (10) mit einem die Verbindungsbohrung (11) aufnehmenden zylinderförmigen Profilelement (15) ausgebildet ist, welches zur Bildung von Kammern (16.1, 16.2, 16.3, 16.4) über Stegwände (17.1, 17.2, 17.3, 17.4, 17.5, 17.6) mit äußeren Seitenwänden (14) des Einlegeteils (10) verbunden ist.

7. Hohlprofil (1) nach einem der Ansprüche 2 bis 6,
**dadurch gekennzeichnet, dass** die äußeren Seitenwände (14) mit den Anlageflächen (14.1) ausgebildet sind.

8. Hohlprofil (1) nach einem der Ansprüche 5 bis 7,
**dadurch gekennzeichne**t, dass der Anschlussflansch (13) mit einer mit der äußeren Fläche (5.1) der Begrenzungswand (5) fluchtenden Stirnfläche (13.1) ausgebildet ist,
- eine Zwischenscheibe (18) mit einer mit der Verbindungsbohrung (11) kongruent ausgebildeten Bohrung (18.1) vorgesehen ist, welche flächenbündig auf der Stirnfläche (13.1) des Anschlussflansches (13) und der diesen umgebenden äußeren Fläche (5.1) der Begrenzungswand (5) aufliegt.

## Claims

1. Hollow profile (1) comprising at least one internal partition wall (2) for forming chambers (3, 4), wherein
- for securing an attachment to the hollow profile (1) an insert part (10) is arranged in a mounting position inside one of the chambers (3),
- the insert part (10) comprises a connection means (11) for forming a connection to the attachment and
- the insert part (10) is designed to have a length (L) for inserting the insert part (10) into the chamber (3) of the hollow profile (1) and positioning it in the mounting position, **characterised in that** the insert part (10) is designed as a multi-chamber profHe with a profile direction (R2) running perpendicular to the profile direction (R1) of the hollow profile (1) and perpendicular to the partition wall (2), the length (L) being formed in its profile direction and
- an end face (12) of the insert part (10) bearing on an outer boundary wall (5) of the hollow profile (1) has a plug-like connection flange (13), which engages in the mounting position in a through opening (6) of the boundary wall (5) to secure the insert part (10).

2. Hollow profile (1) according to claim 1, **characterised in that** the insert part (10) has contact surfaces (14.1), which in the mounting position of the insert part (10) rest substantially flat on the side walls (3.1) of the chamber (3) which are situated adjacent to the boundary wall.

3. Hollow profile (1) according to claim 2, **characterised in that** the side walls (3.1) have at least one fastening opening (3.2) provided in the area of the contact surfaces (14.1) of the insert part (10) for connecting the insert part (10) to the hollow profile (1).

4. Hollow profile (1) according to claim 2, **characterised in that** the side walls (3.1) of the hollow profile (1) are connected to the contact surfaces (14.1) of the insert part (10) by way of a frictional connection and/or a material-to-material connection.

5. Hollow profile (1) according to any of the preceding claims, **characterised in that** the connection means is designed as a connection bore (11) extending in the profile direction (R2) of the insert part (10) and through the connection flange (13).

6. Hollow profile (1) according to claim 5, **characterised in that** the insert part (10) has a cylindrical profile element (15), which receives the connection bore (11), said cylindrical profile element being connected to outer side walls (14) of the insert part (10) via web walls (17.1, 17.2, 17.3, 17.4, 17.5, 17.6) so as to form chambers (16.1, 16.2, 16.3, 16.4).

7. Hollow profile (1) according to any of claims 2 to 6, **characterised in that** the outer side walls (14) are provided with the contact surfaces (14.1).

8. Hollow profile (1) according to any of claims 5 to 7, **characterised in that** the connection flange (13) has an end face (13.1) which is aligned with the outer surface (5.1) of the boundary wall (5),
- an intermediate disc (18) is provided with a bore (18.1) which is congruent with the connection bore (11), which intermediate disc rests flat on the end face (13.1) of the connection flange (13) and on the outer surface (5.1) of the boundary wall (5) surrounding the connection flange.

## Revendications

1. Profilé creux (1) avec au moins une paroi séparatrice (2) située à l'intérieur afin de former des chambres (3, 4), dans lequel
- pour fixer un élément rapporté au profilé creux (1), un élément d'insertion (10) est agencé dans une position de montage à l'intérieur d'une chambre (3),
- l'élément d'insertion (10) présente un moyen d'assemblage (11) afin de réaliser un assemblage avec l'élément rapporté, et
- l'élément d'insertion (10) est réalisé avec une longueur (L) en vue de l'introduction de l'élément d'insertion (10) dans la chambre (3) du profilé creux (1) et de son positionnement dans la position de montage,
**caractérisé en ce que**
- l'élément d'insertion (10) est réalisé sous la forme d'un profilé compartimenté avec une direction de profilé (R2) qui s'étend perpendiculairement à la direction de profilé (R1) du profilé creux (1) et perpendiculairement à la paroi séparatrice (2), la longueur (L) est réalisée dans la direction de profilé de celui-là, et
- une surface frontale (12), adjacente à une paroi de limitation extérieure (5) du profilé creux (1), de l'élément d'insertion (10) présente une bride de raccordement (13) en forme de tenon qui pénètre par concordance de forme dans une ouverture de passage (6) de la paroi de limitation (5) en vue de la fixation de l'élément d'insertion (10) dans la position de montage.

2. Profilé creux (1) selon la revendication 1, **caractérisé en ce que** l'élément d'insertion (10) est réalisé avec des surfaces d'appui (14.1) qui s'appuient globalement par toute leur surface aux parois latérales (3.1) de la chambre (3) qui sont voisines de la paroi de limitation dans la position de montage de l'élément d'insertion (10).

3. Profilé creux (1) selon la revendication 2, **caractérisé en ce que** les parois latérales (3.1) présentent dans la zone des surfaces d'appui (14.1) de l'élément d'insertion (10) au moins une ouverture de fixation (3.2) au moyen de laquelle l'élément d'insertion (10) est assemblé au profilé creux (1).

4. Profilé creux (1) selon la revendication 2, **caractérisé en ce que** les parois latérales (3.1) du profilé creux (1) sont assemblées ensemble par adhérence et/ou par concordance de forme aux surfaces d'appui (14.1) de l'élément d'insertion (10).

5. Profilé creux (1) selon l'une quelconque des revendications précédentes, **caractérisé en ce que** le moyen d'assemblage est réalisé sous la forme d'un trou d'assemblage (11) qui s'étend dans la direction de profilé (R2) de l'élément d'insertion (10) et à travers la bride de raccordement (13).

6. Profilé creux (1) selon la revendication 5, **caractérisé en ce que** l'élément d'insertion (10) est réalisé avec un élément de profilé (15) cylindrique qui reçoit le trou d'assemblage (11) et qui est assemblé par l'intermédiaire de parois formant traverses (17.1, 17.2, 17.3, 17.4, 17.5, 17.6) à des parois latérales extérieures (14) de l'élément d'insertion (10) afin de former des chambres (16.1, 16.2, 16.3, 16.4).

7. Profilé creux (1) selon l'une quelconque des revendications 2 à 6, **caractérisé en ce que** les parois latérales extérieures (14) sont réalisées avec les surfaces d'appui (14.1).

8. Profilé creux (1) selon l'une quelconque des revendications 5 à 7, **caractérisé en ce que** la bride de raccordement (13) est réalisée avec une surface frontale (13.1) alignée avec la surface extérieure (5.1) de la paroi de limitation (5),
- il est prévu un disque intermédiaire (18) pourvu d'un trou (18.1) réalisé congru avec le trou d'assemblage (11), lequel disque repose à fleur de la surface frontale (13.1) de la bride de raccordement (13) et de la surface extérieure (5.1) entourant celle-ci, de la paroi de limitation (5).
